# EUROPÄISCHE PATENTSCHRIFT

(11) **EP 1 863 263 B1**
(45) Veröffentlichungstag und Bekanntmachung des Hinweises auf die Patenterteilung: **11.01.2012**
(21) Anmeldenummer: 07108330.7
(22) Anmeldetag: 16.05.2007
(51) Int. Cl.: H04W 88/02

(54) **Geräteanordnung Festnetzgerät-Mobilfunkendgerät**
Device assembly comprising a fixed network device and a mobile phone terminal
Agencement d'appareils terminaux radio mobiles et d'appareils en réseau fixes

(30) Priorität: 30.05.2006 DE 102006025492
(43) Veröffentlichungstag der Anmeldung: 05.12.2007
(73) Patentinhaber: Vodafone Holding GmbH, 40213 Düsseldorf (DE)
(72) Erfinder: Weichselbaum, Steffen, 40721, Hilden (DE)
(74) Vertreter: Weisse, Renate

(56) Entgegenhaltungen:
- EP-A- 0 740 482
- WO-A-94/17639
- WO-A-95/01070
- US-A1- 2005 101 261

## Beschreibung

### Technisches Gebiet

Die Erfindung betrifft eine Geräteanordnung zur Telekommunikation umfassend
a) ein Mobilfunkendgerät für ein Mobilfunknetz insbesondere nach dem GSM-und UMTS-Standard, mit
   - einer Bedienungs- und Steuereinheit,
   - einer Geräteschnittstelle zur Kopplung des Mobilfunkendgeräts mit anderen Geräten,
   - einer Mobilfunkeinheit zur Kommunikation über das Mobilfunknetz.
b) ein Festnetzgerät zur Kommunikation über Festnetz, insbesondere nach dem ISDN-, VoIP- oder Analog-Standard, mit
   - einer Bedienungs- und Steuereinheit,
   - *einer Anzeige,*
   - *einem Mikrofon und einem Lautsprecher für eine Freisprechfunktion,*
   - einer Festnetzverbindung zur Kommunikation über das Festnetz,
   - einer Geräteschnittstelle zur Kopplung des Festnetzgeräts mit anderen Geräten, insbesondere einem Mobilfunkendgerät.
c) Kopplungsmittel, welche das Mobilfunkendgerät und das Festnetzgerät über die Geräteschnittstelle miteinander koppeln, *und*
*d) ein Schaltmechanismus vorgesehen ist, der die Mobilfunkeinheit des Mobilfunkendgeräts deaktiviert, wenn das Festnetzgerät mit dem Mobilfunkendgerät gekoppelt ist,*
*e) wobei im gekoppelten Zustand nur eine Rufnummer*, *namlich die des Festnetz gerätes*, *vorgesehen ist und mit dem Mobilfunkendgerät (38) über das Festnetz telefoniert werden kann.*

Weiterhin betrifft die Erfindung ein Mobilfunkendgerät für ein Mobilfunknetz, insbesondere nach dem GSM- und UMTS-Standard, enthaltend
a) eine Mobilfunkeinheit zur Kommunikation über das Mobilfunknetz,
b) eine prozessorgestützte Bedienungs- und Steuereinheit,
c) eine Geräteschnittstelle zur Kopplung des Mobilfunkendgeräts mit anderen Geräten,
*d) einen Schaltmechanismus, der die Mobilfunkeinheit deaktiviert, wenn das Mobilfunkendgerät mit einem Festnetzgerät für ein Festnetz über die Geräteschnittstelle gekoppelt ist,*
*e) wobei im gekoppelten Zustand nur eine Rufnummer*, *nämlich die des Festnetz gerätes*, *vorgesehen ist und mit dem Mobilfunkendgerät über das Festnetz telefoniert werden kann.*

Ferner betrifft die Erfindung ein Festnetzgerät zur Kommunikation über ein Festnetz, insbesondere nach dem ISDN-, VoIP- oder Analog-Standard, enthaltend
a) eine Bedienungs- und Steuereinheit, *eine Anzeige, ein Mikrofon und einen Lautsprecher für eine Freisprechfunktion,*
b) eine Festnetzverbindung zur Kommunikation über das Festnetz,
c) einer Geräteschnittstelle zur Kopplung des Festnetzgeräts mit einem Mobilfunkendgerät, wobei das Mobilfunkendgerät eine Mobilfunkeinheit zur Kommunikation über ein Mobilfunknetz enthält.
*d) einen Schaltmechanismus, der die Mobilfunkeinheit des Mobilfunkendgeräts deaktiviert, wenn das Mobilfunkendgerät mit dem Festnetzgerät gekoppelt ist,*
*e) wobei im gekoppelten Zustand nur eine Rufnummer*, *nämlich die des Festnetz gerätes*, *vorgesehen ist und mit dem Mobilfunkendgerät über das Festnetz telefoniert werden kann.*

### Stand der Technik

Mit Festnetzgeräten können Benutzer über ein Festnetz kommunizieren. Verbindungen können zu einem oder mehreren Festnetzanschlüssen oder Mobilfunkendgeräten hergestellt werden. Die Festnetze sind standardisiert und arbeiten beispielsweise nach dem ISDN- oder dem älteren Analog-Standard (ISDN= Integrated Services Digital Network). Mittlerweile wird immer öfter auch VoIP (Voice over Internet Protocol) verwendet. Dabei werden Gespräche über das Internet mit den entsprechenden Protokollen gesendet. Festnetzgeräte bieten dem Benutzer mittlerweile sehr umfangreiche Funktionalitäten. Üblicherweise sind beispielsweise große Anzeigen, Schnellwahlknöpfe, Softkeys, Anrufbeantworter- und Freisprechfunktionen im Festnetzgerät enthalten. Geräteschnittstellen im Festnetzgerät ermöglichen die Kommunikation mit anderen Geräten, wie etwa Computer, PDAs, Drucker oder Speichersticks. Die Liste der Funktionalitäten ist an dieser Stelle nicht abschließend.

Die Geräteschnittstellen können für drahtlose Verbindungen ausgelegt sein, beispielsweise mit den Funkstandards Bluetooth oder WLAN (Wireless Local Area Network). Auch der Infrarot-Standard IrDA (Infrared Data Association) wird verwendet. Bei Geräteschnittstellen für Kabelverbindungen wird u.a. der USB-Standard (Universal Serial Bus) benutzt.

Mit Mobilfunkendgeräten können Mobilfunkteilnehmer über ein Mobilfunknetz kommunizieren. Dabei kann eine Verbindung zu wenigstens einem anderen Mobilfunkendgerät oder zu einem Festnetzanschluss hergestellt werden. Die Mobilfunknetze sind üblicherweise standardisiert und arbeiten beispielsweise nach dem GSM- oder UMTS-Standard (GSM= Globel System for Mobile communication; UMTS= Universal Mobile Telecommunications System). Zum Senden und Empfangen von Daten über das Mobilfunknetz enthalten Mobilfunkendgeräte eine Mobilfunkeinheit mit Antenne. Mittlerweile eignen sich Mobilfunkendgeräte nicht nur zur Kommunikation, sondern in ihnen sind zahlreiche weitere Funktionalitäten, wie z.B. Spiele, Uhr, Rechner, Kalender, Terminplaner, Adressbuch, Navigationsmodul oder digitale Kamera integriert. Die Liste der Funktionalitäten ist an dieser Stelle nicht abschließend. Es lassen sich beliebige Funktionen und Module mit bestimmten Funktionen in solche Mobilfunkendgeräte aufnehmen. Zum Datenaustausch mit anderen Geräten im lokalen Bereich ist üblicherweise mindestens eine Geräteschnittstelle im Mobilfunkendgerät enthalten. Neben einer Kabelverbindung, beispielsweise im USB-Standard, werden auch drahtlose Verbindungen, insbesondere im Bluetooth-, WLAN-oder IrDA-Standard verwendet.

Hat ein Benutzer die Wahl zwischen einem Mobilfunkendgerät und einem Festnetzgerät, wie etwa an seinem Arbeitsplatz, entscheidet er sich oft für das Festnetzgerät. Neben den oft günstigeren Festnetzgebühren stellt das Festnetzgerät dem Benutzer üblicherweise wesentlich umfangreichere und komfortablere Funktionalitäten zu Verfügung. Die Weiterschaltung eines Anrufs vom Festnetzgerät auf das Mobilfunkendgerät und umgekehrt muss umständlich manuell erfolgen.

Die deutsche Offenlegungsschrift DE 102 55 489 A1 offenbart eine Kommunikationsanlage zur Steuerung der Weiterschaltung eines Anrufs zwischen einem Mobilfunknetz und einem Festnetz. Dabei ist einem Mobilfunkgerät eine Rufnummer zugeordnet. Festnetz-Endgerät und Mobilfunkgerät sind mit einer Kurzstrecken-Schnittstelle miteinander verbunden. Die Mobilfunkeinheit des Mobilfunkgeräts bleibt bei bestehender Verbindung mit dem Festnetzgerät aktiv. Das Mobilfunkendgerät sendet Sprach-, Multimedia- und andere Daten weiterhin über ein Mobilfunknetz. Ein Benutzer kann trotz bestehender Kopplung von Mobilfunkendgerät und Festnetzgerät mit dem Mobilfunkendgerät nur über das Mobilfunknetz kommunizieren. Es wird ihm nicht ermöglicht, mit dem Mobilfunkendgerät die wesentlich günstigeren Verbindungsgebühren eines Festnetzes zu nutzen.

*Die WO 95*/*01070 beschreibt eine Kommunikationsanordnung, die eine "intelligente" Verbindung zwischen den Nummern eines Kommunikationsnetzes durch Umleiten eines Anrufs, entweder auf ein Mobilfunkgerät oder auf ein schnurloses Endgerät, erzeugt. In einem externen Gehäuse sind Schaltungen untergebracht, die die Kommunikation in die zwei Netze, das Mobilfunknetz und das stationäre Telefonnetz, bereitstellen. Die automatische Umleitung von Anrufen in das ausgewählte Netz geschieht durch Platzieren des Mobilfunkgerätes in oder dem Entfernen des Mobilfunkgerätes aus einer Batterieladestation, wobei eine Steuereinheit den jeweiligen Rufumleitungsdienst aktiviert. Wird beispielsweise das Mobilfunkendgerät aus der Ladestation genommen, werden durch die Steuereinheit alle Anrufe an das Mobilfunkendgerät weitergeleitet. Ein Verbinden des Mobilfunkgerätes mit der Ladestation bedingt einen Rufumleitungsdienst auf das schnurlose Endgerät, das mit einer Basiseinheit kommuniziert.*

*Die* EP 0740 482 Al *offenbart ein Telefon -Managementsystem, bestehend aus einer Ladestation für ein Mobilfunkgerät, einer Ladestation für ein schnurloses Telefon und einem Anrufbeantworter. Ein Anrufer kann über eine einzelne Nummer alle Geräte erreichen. Je nachdem, welches Telefon sich nicht in der Ladestation befindet, wird der Telefonanruf an dieses Gerät weitergeleitet. Befindet sich das Mobilfunkgerät bzw. das schnurlose Telefon in der Ladestation, ist es automatisch gesperrt und der Anruf wird dann an das Gerät weitergeleitet, das sich nicht in der Ladestation befindet oder, wenn sich beide Geräte außerhalb ihrer Ladestationen befinden, wird der Anruf an den Anrufbeantworter geleitet.*

*Die* US 2005 0101261 Al *befasst sich mit einer Schnittstellenanordnung, bestehend aus einem Mobilfunktelefon und mehreren Festnetztelefonen. Die Schnittstellenanordnung umfasst eine Ladestation für das Mobilfunktelefon, einen Bluetooth-Transceiver und eine Schnittstelle, die eine Verbindung zwischen dem Mobilfunktelefon und den Festnetzgeräten herstellt. Das Mobilfunkgerät stellt dabei eine Bluetooth-Verbindung zu der Schnittstellenanordnung her, die ihrerseits durch Kabel mit den Festnetzgeräten verbunden ist. Anrufe werden von den Festnetzgeräten über die Schnittstellenanordnung an das Mobilfunkendgerät geleitet und umgekehrt.*

### Offenbarung der Erfindung

Aufgabe der Erfindung ist es daher, die Nachteile des Standes der Technik zu vermeiden und eine manuelle Weiterschaltung eines Anrufs zu verhindern, wenn Mobilfunkendgerät und Festnetzgerät miteinander gekoppelt sind. Ferner ist es Aufgabe der Erfindung, einem Benutzer die umfangreicheren und komfortableren Funktionalitäten eines Festnetzgeräts für ein Mobilfunkendgerät zur Verfügung zu stellen.

Erfindungsgemäß wird die Aufgabe dadurch gelöst, dass bei einer Geräteanordnung zur Telekommunikation der eingangs genannten Art
*f) die Bedienungs- und Steuereinheit, die Anzeige, das Mikrofon und*/*oder der Lautsprecher des Festnetzgeräts im gekoppelten Zustand für das* Mobilfunkendgerät *nutzbar ist.*

Weiterhin wird die Aufgabe dadurch gelöst, dass bei einem Mobilfunkendgerät für ein Mobilfunknetz, insbesondere nach dem GSM- und UMTS-Standard der eingangs genannten Art
*f) eine Bedienungs- und Steuereinheit, eine Anzeige, ein Mikrofon und*/*oder ein Lautsprecher des Festnetzgeräts im gekoppelten Zustand für das Mobilfunkendgerät nutzbar ist.*

Die Aufgabe wird ferner dadurch gelöst, dass bei einem Festnetzgerät zur Telekommunikation über das Festnetz, insbesondere nach dem ISDN-, VoIP- oder Analog-Standard der eingangs genannten Art
*f) die Bedienungs- und Steuereinheit, die Anzeige, das Mikrofon und*/*oder der Lautsprecher des Festnetzgeräts im gekoppelten Zustand für das Mobilfunkendgerät nutzbar ist.*

Durch den Schaltmechanismus kann die Mobilfunkeinheit des Mobilfunkendgeräts aktiviert oder deaktiviert werden. Bei einer Kopplung von Mobilfunkendgerät und Festnetzgerät wird die Mobilfunkeinheit deaktiviert. Die Kopplung kann über die Geräteschnittstellen drahtlos oder mit einem Kabel hergestellt werden. Beispiele für eine drahtlose Verbindung sind die Funkstandards Bluetooth oder WLAN und der Infrarotstandard IrDA. Bei Kabelverbindungen wird oft der USB-Standard benutzt. Ist die Kopplung zwischen Mobilfunkendgerät und Festnetzgerät hergestellt und die Mobilfunkeinheit deaktiviert, sendet und empfängt das Mobilfunkendgerät Sprach-, Multimedia- und andere Daten nicht mehr über ein Mobilfunknetz, sondern über das Kopplungsmittel und das Festnetzgerät. Der Benutzer kann so kostengünstig mit einem Mobilfunkendgerät über das Festnetz telefonieren. Über die Kopplung kann der Benutzer die oft umfangreicheren und komfortableren Funktionalitäten eines Festnetzgeräts auch für ein Mobilfunkendgerät nutzen.

In einer bevorzugten Ausgestaltung der erfindungsgemäßen Geräteanordnung zur Telekommunikation ist im gekoppelten Zustand nur eine Rufnummer vorgesehen. So wird eine umständliche manuelle Weiterleitung vermieden.

Bei der Entkopplung kann die Mobilfunkeinheit automatisch aktiviert werden. Der Benutzer ist immer unter derselben Nummer erreichbar. Wiederum wird eine umständliche manuelle Weiterleitung vermieden.

Gemäß einer bevorzugten Ausgestaltung der erfindungsgemäßen Geräteanordnung zur Telekommunikation sind die Geräteschnittstellen als Funkmodule, insbesondere nach dem Bluetooth- oder WLAN-Standard ausgebildet. Diese weit verbreiteten Standards ermöglichen eine drahtlose Verbindung mit hoher Datenübertragungsrate. Die Herstellung der Verbindung kann benutzerfreundlich ohne Kabel und automatisch erfolgen, wenn sich beide Geräte in Funkreichweite befinden. Dies kann beispielsweise dann erfolgen, wenn der Benutzer sein Arbeitszimmer betritt.

Bei einer weiteren Ausgestaltung der erfindungsgemäßen Geräteanordnung zur Telekommunikation sind die Geräteschnittstellen als Kabelverbinder, z.B. im USB-Standard ausgebildet. Durch ein Kabel werden Mobilfunkendgerät und Festnetzgerät miteinander gekoppelt. Eine Kabelverbindung ermöglicht einen sehr schnellen und sicheren Datentransfer bei geringer Störanfälligkeit.

In einer bevorzugten Ausbildung der erfindungsgemäßen Geräteanordnung zur Telekommunikation weist das Festnetzgerät eine gegenüber dem Mobilfunkendgerät vergrößerte Bedienungseinheit auf. Bei bestehender Kopplung zwischen Mobilfunkendgerät und Festnetzgerät erweitert die vergrößerte Bedienungseinheit die Funktionalität des Mobilfunkendgeräts. Der Benutzer kann so u. a. über eine größere Anzeige, Schnellwahltasten, mehr Softkeys und ein besseres Freisprechen verfügen.

Weitere Vorteile ergeben sich aus dem Gegenstand der Unteransprüche, sowie den Zeichnungen mit den dazugehörigen Beschreibungen.

### Kurze Beschreibung der Zeichnungen

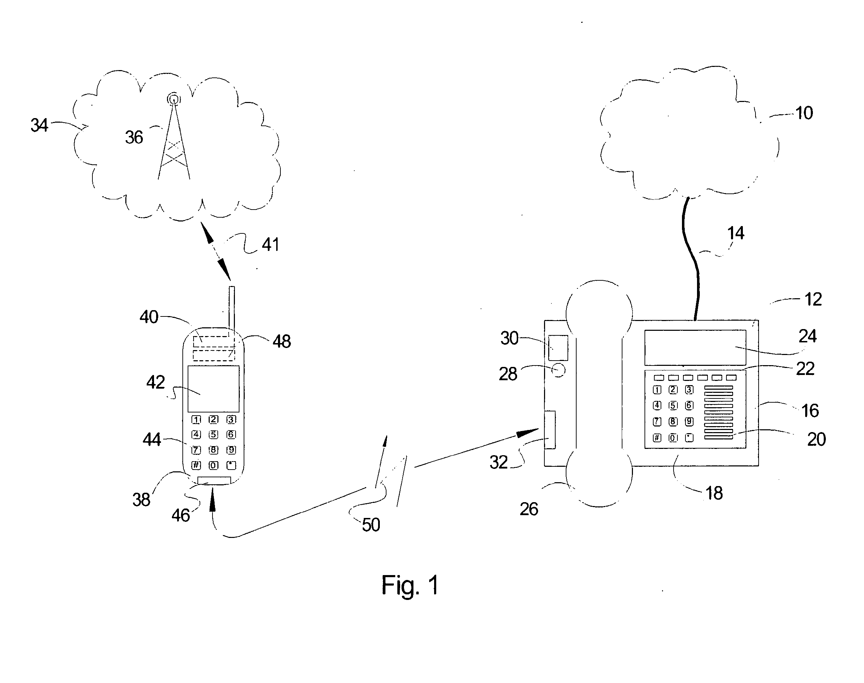

- Fig. 1: zeigt in einer schematischen Prinzipskizze ein erstes Ausführungsbeispiel einer erfindungsgemäßen Geräteanordnung mit einem Schaltmechanismus zum Deaktivieren der Mobilfunkeinheit im Mobilfunkendgerät, wobei die Kopplung zwischen Festnetzgerät und Mobilfunkendgerät drahtlos erfolgt.

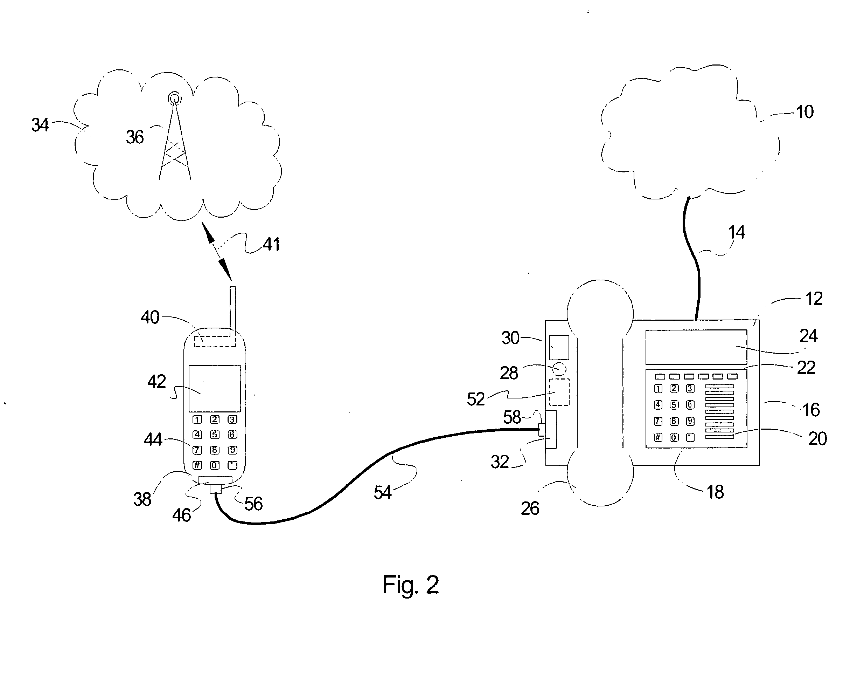

- Fig. 2: zeigt in einer schematischen Prinzipskizze ein zweites zur Fig. 1 entsprechendes Ausführungsbeispiel einer erfindungsgemäßen Geräte- anordnung mit einem Schaltmechanismus zum Deaktivieren der Mobilfunkeinheit im Festnetzgerät, wobei die Kopplung zwischen Festnetzgerät und Mobilfunkendgerät durch eine Kabelverbindung erfolgt.

### Bevorzugte Ausführungsbeispiele

In Fig. 1 wird mit 10 ein Festnetz zur Telekommunikation bezeichnet. Das Festnetz 10 enthält alle Bestandteile, die für ein Festnetz, beispielsweise nach dem ISDN-, VoIP-oder Analog-Standard erforderlich sind. Festnetze nach dem ISDN-, VoIP- oder Analog-Standard sind dem Fachmann geläufig und werden der Einfachheit halber nur durch eine Wolke stilisiert dargestellt. Mit einem Festnetzgerät 12 können Benutzer über das Festnetz 10 kommunizieren. Dazu ist das Festnetzgerät 12 über ein Kabel 14 mit dem Festnetz 10 verbunden.

Das Festnetzgerät 12 weist eine Bedienungseinheit 16 auf. Über die Bedienungseinheit 16 erfolgt die Steuerung des Festnetzgeräts 12. Mit einem Ziffernblock 18 werden beispielsweise Telefonnummern, Namen und Adressen eingegeben. Ferner weist die Bedienungseinheit 16 Schnellwahltasten 20 zur direkten Anwahl von Telefonanschlüssen und Softkeys 22 auf. Mittels einer im Festnetzgerät 12 enthaltenen Anzeige 24 werden Nummern, Namen, Adressen, Menüs und die Funktionen der Softkeys 22 dargestellt. Gespräche werden entweder mit einem Telefonhörer 26 oder, bei aktivierter Freisprechfunktion, über ein Mikrofon 28 und einen Lautsprecher 30 geführt. Das Festnetzgerät 12 enthält ferner eine Geräteschnittstelle 32 zum drahtlosen Verbinden mit anderen Geräten, beispielsweise mit den Funkstandards Bluetooth oder WLAN, oder dem Infrarotstandard IrDA. Über die Geräteschnittstelle 32 kann das Festnetzgerät 12 Sprach-, Multimedia- und andere Daten sowie Steuersignale empfangen oder senden.

Weiterhin wird in Fig. 1 mit 34 ein Mobilfunknetz bezeichnet. Das Mobilfunknetz 34 enthält alle Bestandteile, die für ein Mobilfunknetz, beispielsweise nach dem GSM- oder UMTS-Standard, erforderlich sind. Mobilfunknetze nach dem GSM- und UMTS-Standard sind dem Fachmann geläufig und werden der Einfachheit halber nur durch eine Wolke mit einem darin enthaltenen Mast 36 stilisiert dargestellt. Mittels eines Mobilfunkendgerätes 38 können Mobilfunkteilnehmer über das Mobilfunknetz kommunizieren. Dazu enthält das Mobilfunkendgerät 38 eine geeignete Mobilfunkeinheit 40 zum Senden und Empfangen von Daten, Pfeil 41.

Das Mobilfunkendgerät 38 weist ferner eine Anzeige 42 auf, welche die Darstellung von Nummern, Adressen oder Bedienermenüs zur Bedienung des Mobilfunkendgeräts 38 ermöglicht. Die Steuerung des Mobilfunkendgeräts 38 erfolgt durch den Mobilfunkteilnehmer über eine Tastatur 44. Über die Tastatur 44 werden die jeweils gewünschten Menüs angesteuert oder sonstige Steuerungsbefehle zur Steuerung des Mobilfunkendgeräts 38 eingegeben. Außerdem können über die Tastatur 44 Telefonnummern oder Adressen eingegeben werden. Über eine im Mobilfunkendgerät 38 enthaltene Geräteschnittstelle 46 kann eine drahtlose Verbindung zu anderen Geräten, beispielsweise mit den Funkstandards Bluetooth oder WLAN, oder dem Infrarotstandard IrDA hergestellt werden.

Das Mobilfunkendgerät 38 besitzt weiterhin einen Schaltmechanismus 48 zum Deaktivieren der Mobilfunkeinheit 40. Bei einer bestehenden Kopplung des Mobilfunkendgeräts 38 mit dem Festnetzgerät 12 durch eine drahtlose Verbindung 50 über die Geräteschnittstellen 32, 46 kann der Schaltmechanismus 48 die Mobilfunkeinheit 40 deaktivieren. Das Mobilfunkendgerät 38 sendet und empfängt dann Sprach-, Multimedia- oder andere Daten nicht mehr über das Mobilfunknetz 34 sondern über die drahtlose Verbindung 50 und das Festnetzgerät 12. Die Kopplung kann automatisch und somit benutzerfreundlich hergestellt werden, wenn das Mobilfunkendgerät 38 und das Festnetzgerät 12 in Reichweite sind. Dies kann beispielsweise passieren, wenn der Benutzer sein Arbeitszimmer betritt.

Ist die Kopplung über die drahtlose Verbindung 50 aufgebaut und die Mobilfunkeinheit 40 des Mobilfunkendgeräts 38 deaktiviert, kann der Benutzer kostengünstig mit dem Mobilfunkendgerät 38 über das Festnetz 10 telefonieren. Die erfindungsgemäße Geräteanordnung kann im gekoppelten Zustand nur eine gemeinsame Rufnummer vorsehen. So wird eine umständliche manuelle Weiterleitung vermieden. Werden Mobilfunkendgerät 38 und Festnetzgerät 12 entkoppelt, kann die gemeinsame Rufnummer bei dem Mobilfunkendgerät 38 verbleiben. Der Benutzer ist immer unter der gleichen Rufnummer erreichbar. Die Aktivierung der Mobilfunkeinheit 40 durch den Schaltmechanismus 48 kann bei Unterbrechung der drahtlosen Verbindung 50 automatisch, also benutzerfreundlich erfolgen.

Besteht eine Kopplung zwischen dem Festnetzgerät 12 und dem Mobilfunkendgerät 38, kann der Benutzer die umfangreichere Funktionalität und den höheren Komfort des Festnetzgeräts 12 auch für das Mobilfunkendgerät 38 benutzen. Die Bedienungseinheit 16 enthält beispielsweise Schnellwahltasten 20 und mehr Softkeys 22 als die Tastatur 44 des Mobilfunkendgeräts 38. Der Benutzer kann die größere Anzeige 24 des Festnetzgeräts 12 und dessen Freisprechfunktion mittels Lautsprecher 30 und Mikrofon 38 auch für das Mobilfunkendgerät 38 benutzen.

Fig. 2 zeigt entsprechend zu Fig. 1 eine erfindungsgemäße Geräteanordnung, bestehend aus einem Mobilfunkendgerät 38 und einem Festnetzgerät 12, die koppelbar sind. Gleiche Bestandteile werden daher auch mit entsprechenden Bezugszeichen bezeichnet. Im Unterschied zu Fig. 1 befindet sich der Schaltmechanismus 52 zur Deaktivierung der Mobilfunkeinheit 40 jedoch nicht im Mobilfunkendgerät 38, sondern im Festnetzgerät 12. Die Kopplung wird außerdem durch ein Kabel 54, Gerätestecker 56, 58 und Geräteschnittstellen 46 und 32 realisiert.

Durch eine Kopplung mit einem Kabel 54, beispielsweise mit USB-Standard, wird eine sehr schnelle Datenübertragung möglich. Zudem sind Kabelverbindungen weniger störanfällig und sicherer als drahtlose Verbindungen.

## Patentansprüche

1. Geräteanordnung zur Telekommunikation umfassend
a) ein Mobilfunkendgerät (38) für ein Mobilfunknetz (34) insbesondere nach dem GSM- und UMTS-Standard, mit
- einer Bedienungs- und Steuereinheit (44),
- einer Geräteschnittstelle (46) zur Kopplung des Mobilfunkendgeräts (38) mit anderen Geräten,
- einer Mobilfunkeinheit (40) zur Kommunikation über das Mobilfunknetz (34),
b) ein Festnetzgerät (12) zur Kommunikation über ein Festnetz (10), insbesondere nach dem ISDN-, VoIP- oder Analog-Standard, mit
- einer Bedienungs- und Steuereinheit (16),
- *einer Anzeige (24),*
- *einem Mikrofon (28) und einem Lautsprecher (30) für eine Freisprechfunktion,*
- einer Festnetzverbindung (14) zur Kommunikation über das Festnetz (10),
- einer Geräteschnittstelle (32) zur Kopplung des Festnetzgeräts (12) mit anderen Geräten, insbesondere einem Mobilfunkendgerät (38),
c) Kopplungsmittel (50, 54), welche das Mobilfunkendgerät (38) und das Festnetzgerät (12) über die Geräteschnittstellen (32, 46) miteinander koppeln, *und*
d) ein Schaltmechanismus (48, 52) vorgesehen ist, der die Mobilfunkeinheit (40) des Mobilfunkendgeräts (38) deaktiviert, wenn das Festnetzgerät (12) mit dem Mobilfunkendgerät (38) gekoppelt ist,
*e) wobei im gekoppelten Zustand nur eine Rufnummer*, *nämlich die des Festnetz gerätes (12)*, vorgesehen *ist und mit dem Mobilfunkendgerät (38) über das Festnetz telefoniert werden kann,*
***dadurch gekennzeichnet, dass***
*f) die Bedienungs- und Steuereinheit (44), die Anzeige (24), das Mikrofon (38) und*/*oder der Lautsprecher (30) des Festnetzgeräts (12) im gekoppelten Zustand für das Mobilfunkendgerät (38) nutzbar ist.*

2. Geräteanordnung zur Telekommunikation nach Anspruch 1 **dadurch gekennzeichnet, dass** die Geräteschnittstellen (46, 32) als Funkmodule, insbesondere Bluetooth oder WLAN, ausgebildet sind.

3. Geräteanordnung zur Telekommunikation nach Anspruch 1, **dadurch gekennzeichnet, dass** die Geräteschnittstellen (46, 32) als Gerätestecker (56, 58), insbesondere USB, ausgebildet sind, welche über Kabel (54) miteinander gekoppelt werden.

4. Geräteanordnung zur Telekommunikation nach einem der Ansprüche 1 bis 3, **dadurch gekennzeichnet, dass** das Festnetzgerät (12) eine gegenüber dem Mobilfunkendgerät (38) vergrößerte Bedienungseinheit (16) aufweist.

5. Mobilfunkendgerät (38) für ein Mobilfunknetz (34), insbesondere nach dem GSM-und UMTS-Standard, enthaltend
a) eine Mobilfunkeinheit (40) zur Kommunikation über das Mobilfunknetz (34),
b) eine prozessorgestützte Bedienungs- und Steuereinheit (44),
c) eine Geräteschnittstelle (46) zur Kopplung des Mobilfunkendgeräts (38) mit anderen Geräten und
d) einen Schaltmechanismus (48), der die Mobilfunkeinheit (40) deaktiviert, wenn das Mobilfunkendgerät (38) mit einem *Festnetzgerät. (12) für ein Festnetz (10)* über die Geräteschnittstelle (46) gekoppelt ist,
*e) wobei im gekoppelten Zustand nur eine Rufnummer* , nämlich die des Festnetz gerätes (12), *vorgesehen ist und mit dem Mobilfunkendgerät (38) über das Festnetz telefoniert werden kann,*
***dadurch gekennzeichnet, dass***
*f) eine Bedienungs- und Steuereinheit (44), eine Anzeige (24), ein Mikrofon (38) und*/*oder ein Lautsprecher (30) des Festnetzgeräts (12) im gekoppelten Zustand für das Mobilfunkendgerät (38) nutzbar ist.*

6. Festnetzgerät (12) zur Kommunikation über ein Festnetz (10), insbesondere nach dem ISDN-, VoIP- oder Analog-Standard, enthaltend
a) eine Bedienungs- und Steuereinheit (16), *eine Anzeige (24), ein Mikrofon (28) und einen Lautsprecher (30) für eine Freisprechfunktion,*
b) eine Festnetzverbindung (14) zur Kommunikation über das Festnetz (10),
c) eine Geräteschnittstelle (32) zur Kopplung des Festnetzgeräts (12) mit einem Mobilfunkendgerät (38), wobei das Mobilfunkendgerät (38) eine Mobilfunkeinheit (40) zur Kommunikation über ein Mobilfunknetz (34) enthält,
d) einen Schaltmechanismus (48 52) der die Mobilfunkeinheit (40) des Mobilfunkendgeräts (38) deaktiviert, wenn das Mobilfunkendgerät (38) mit dem Festnetzgerät (12) gekoppelt ist,
*e) wobei im gekoppelten Zustand nur eine Rufnummer*, *nämlich die des Festnetz gerätes (12)*, *vorgesehen ist und mit dem Mobilfunkendgerät (38) über das Festnetz telefoniert werden kann,*
***dadurch gekennzeichnet, dass***
*f) die Bedienungs- und Steuereinheit (44), die Anzeige (24), das Mikrofon (38) undloder der Lautsprecher (30) des Festnetzgeräts (12) im gekoppelten Zustand für das Mobilfunkendgerät (38) nutzbar ist.*

## Claims

1. A device arrangement for telecommunication comprising
a) a mobile terminal (38) for a mobile radio network (34), particularly according to GSM or UMTS standard, comprising
- an operating an controlling unit (44);
- a device interface (46) for coupling the mobile terminal (38) to other devices;
- a mobile radio unit (40) for communication via the mobile radio network (34);
b) a fixed line device (12) for communication via a fixed line network (10), particularly according to ISDN, VoIP- or analog standard, comprising
- an operating and controlling unit (16);
- a display (24);
- a microphone (28) and a loudspeaker (30) for a hands-free function;
- a fixed line network connection (14) for communication via the fixed line network (10);
- a device interface (32) for coupling the fixed line device (12) to other devices, particularly to a mobile terminal (38);
c) coupling means (50, 54) coupling the mobile terminal (38) and the fixed line device (12) to each other via the device interfaces (32, 46); and
d) a switching mechanism (48, 52), which deactivates the mobile radio unit (40) of the mobile terminal (38) when the fixed line device (12) is coupled to the mobile radio terminal (38);
e) wherein only one call number is provides in the coupled state, namely the call number of the fixed line device (12), and calls are possible via the fixed line network using the mobile terminal (38);
**characterized in that**
f) the operating and controlling unit (44), the display (24), the microphone (38) and/or the loudspeaker (30) of the fixed line device (12) are usable by the mobile terminal (38) in the coupled state.

2. A device arrangement for telecommunication according to claim 1, **characterized in that** the device interfaces (46, 32) are radio modules, particularly Bluetooth or WLAN modules.

3. A device arrangement for telecommunication according to claim 1, **characterized in that** the device interfaces (46, 32) are device plug connectors (56, 58), particularly USB connectors, which are coupled to each other via a cable (54).

4. A device arrangement for telecommunication according to one of claims 1 to 3, **characterized in that**, compared with the mobile terminal (38), the fixed line device (12) comprises an increased operating unit (16).

5. A mobile terminal (38) for a mobile radio network (34), particularly according to GSM or UMTS standard, comprising
a) a mobile radio unit (40) for communication via the mobile radio network (34);
b) a processor based operating an controlling unit (44);
c) a device interface (46) for coupling the mobile terminal (38) to other devices; and
d) a switching mechanism (48), which deactivates the mobile radio unit (40) when the mobile terminal (38) is coupled to a fixed line device (12) for a fixed line network (10) via the device interface (46);
e) wherein only one call number is provides in the coupled state, namely the call number of the fixed line device (12), and calls are possible via the fixed line network using the mobile terminal (38);
**characterized in that**
f) an operating and controlling unit (44), a display (24), a microphone (38) and/or a loudspeaker (30) of the fixed line device (12) are usable by the mobile terminal (38) in the coupled state.

6. A fixed line device (12) for communication via a fixed line network (10), particularly according to ISDN, VoIP- or analog standard, comprising
a) an operating and controlling unit (16), a display (24), a microphone (28) and a loudspeaker (30) for a hands-free function;
b) a fixed line network connection (14) for communication via the fixed line network (10);
c) a device interface (32) for coupling the fixed line device (12) to a mobile terminal (38), wherein the mobile terminal (38) comprises a mobile radio unit (40) for communication via a mobile radio network (34);
d) a switching mechanism (48, 52), which deactivates the mobile radio unit (40) of the mobile terminal (38) when the mobile radio terminal (38) is coupled to the fixed line device (12);
e) wherein only one call number is provides in the coupled state, namely the call number of the fixed line device (12), and calls are possible via the fixed line network using the mobile terminal (38);
**characterized in that**
f) the operating and controlling unit (44), the display (24), the microphone (38) and/or the loudspeaker (30) of the fixed line device (12) are usable in the coupled state by the mobile terminal (38).

## Revendications

1. Disposition d'appareils destinée à la télécommunication comprenant
(a) un terminal de radiotéléphonie mobile (38) pour un réseau de radiotéléphonie mobile (34) notamment d'après les standards GSM et UMTS, muni de
- une unité de commande et de sélection (44),
- une interface d'appareil (46) pour le couplage du terminal de radiotéléphonie mobile (38) à d'autres appareils,
- une unité de radiotéléphonie mobile (40) pour la communication via le réseau de radiotéléphonie mobile (34),
(b) un appareil de téléphonie fixe (12) pour la communication via un réseau de téléphonie fixe (10), notamment d'après les standards analogiques, ISDN ou VoIP, muni de
- une unité de commande et de sélection (16),
- un dispositif d'affichage (24),
- un microphone (28) et un haut-parleur (30) destinés à la fonction mains libres,
- une connexion au réseau de téléphonie fixe (14) pour la communication via le réseau de téléphonie fixe (10),
- une interface d'appareil (32) pour le couplage de l'appareil de téléphonie fixe (12) à d'autres appareils, notamment à un terminal de radiotéléphonie mobile (38),
(c) des moyens de couplage (50, 54) couplant le terminal de radiotéléphonie mobile (38) à l'appareil de téléphonie fixe (12) via les interfaces d'appareil (32, 46), et
(d) un mécanisme de commutation (48, 52) qui désactive l'unité de radiotéléphonie mobile (40) du terminal de radiotéléphonie mobile (38) lorsque l'appareil de téléphonie fixe (12) est couplé au terminal de radiotéléphonie mobile (38),
(e) une fois le couplage effectué, un seul numéro d'appel étant prévu, à savoir celui de l'appareil de téléphonie fixe (12), et les communications téléphoniques avec le terminal de radiotéléphonie mobile (38) via le réseau de téléphonie fixe étant possibles,
**caractérisée en ce que**
(f) une fois le couplage effectué, l'unité de commande et de sélection (44), le dispositif d'affichage (24), le microphone (38) et/ou le haut-parleur (30) de l'appareil de téléphonie fixe (12) peuvent être utilisés pour le terminal de radiotéléphonie mobile (38).

2. Disposition d'appareils destinée à la télécommunication selon la revendication 1, **caractérisée en ce que** les interfaces d'appareil (46, 32) sont configurées sous forme de modules de radiotéléphonie, notamment Bluetooth ou WLAN.

3. Disposition d'appareils destinée à la télécommunication selon la revendication 1, **caractérisée en ce que** les interfaces d'appareil (46, 32) sont configurées sous forme de connecteurs d'appareil (56, 58), notamment USB, qui sont couplés les uns aux autres par l'intermédiaire de câbles (54).

4. Disposition d'appareils destinée à la télécommunication selon l'une quelconque des revendications 1 à 3, **caractérisée en ce que** l'appareil de téléphonie fixe (12) présente une unité de sélection (16) plus grande par rapport au terminal de radiotéléphonie mobile (38).

5. Terminal de radiotéléphonie mobile (38) pour un réseau de radiotéléphonie mobile (34), notamment d'après les standards GSM et UMTS, comprenant
(a) une unité de radiotéléphonie mobile (40) pour la communication via le réseau de radiotéléphonie mobile (34),
(b) une unité de commande et de sélection (44) assistée par processeur,
(c) une interface d'appareil (46) pour le couplage du terminal de radiotéléphonie mobile (38) à d'autres appareils et
(d) un mécanisme de commutation (48) désactivant l'unité de radiotéléphonie mobile (40) lorsque le terminal de radiotéléphonie mobile (38) est couplé à un appareil de téléphonie fixe (12) pour un réseau de téléphonie fixe (10) via l'interface d'appareil (46),
(e) une fois le couplage effectué, un seul numéro d'appel étant prévu, à savoir celui de l'appareil de téléphonie fixe (12), et les communications téléphoniques avec le terminal de radiotéléphonie mobile (38) via le réseau de téléphonie fixe étant possibles,
**caractérisé en ce que**
(f) une fois le couplage effectué, une unité de commande et de sélection (44), un dispositif d'affichage (24), un microphone (38) et/ou un haut-parleur (30) de l'appareil de téléphonie fixe (12) peuvent être utilisés pour le terminal de radiotéléphonie mobile (38).

6. Terminal de téléphonie fixe (12) pour la communication via un réseau de téléphonie fixe (10), notamment d'après les standards analogiques, ISDN ou VoIP, comprenant
(a) une unité de commande et de sélection (16), un affichage (24), un microphone (28) et un haut-parleur (30) pour la fonction mains libres,
(b) une connexion à un réseau de téléphonie fixe (14) pour la communication via le réseau de téléphonie fixe (10),
(c) une interface d'appareil (32) pour le couplage de l'appareil de téléphonie fixe (12) à un terminal de radiotéléphonie mobile (38), le terminal de radiotéléphonie mobile (38) comprenant une unité de radiotéléphonie mobile (40) pour la communication via un réseau de radiotéléphonie mobile (34),
(d) un mécanisme de commutation (48, 52) désactivant l'unité de radiotéléphonie mobile (40) du terminal de radiotéléphonie mobile (38) lorsque le terminal de radiotéléphonie mobile (38) est couplé à l'appareil de téléphonie fixe (12),
(e) une fois le couplage effectué, un seul numéro d'appel étant prévu, à savoir celui de l'appareil de téléphonie fixe (12), et les communications téléphoniques avec le terminal de radiotéléphonie mobile (38) via le réseau de téléphonie fixe étant possibles,
**caractérisé en ce que**
(f) une fois le couplage effectué, l'unité de commande et de sélection (44), le dispositif d'affichage (24), le microphone (38) et/ou le haut-parleur (30) de l'appareil de téléphonie fixe (12) peuvent être utilisés pour le terminal de radiotéléphonie mobile (38).
